# EUROPÄISCHE PATENTSCHRIFT

(11) **EP 0 525 321 B1**
(45) Veröffentlichungstag und Bekanntmachung des Hinweises auf die Patenterteilung: **27.12.1995**
(21) Anmeldenummer: 92108611.2
(22) Anmeldetag: 21.05.1992
(51) Int. Cl.: A01D 34/17

(54) **Mähbalken mit einem Balkenrücken, einem Untermesser und einem angetriebenen Obermesser**
Cutting bar, with knife-bar, a lower blade and a driven upper blade
Barre de coupe, avec un porte-lame, une lame inférieure et une lame supérieure entraînée

(30) Priorität: 27.07.1991 DE 4125009
(43) Veröffentlichungstag der Anmeldung: 03.02.1993
(73) Patentinhaber: ESM ENNEPETALER SCHNEID- UND MÄHTECHNIK GMBH & CO. KG, D-58256 Ennepetal (DE)
(72) Erfinder: Schlasse, Manfred, W-5800 Hagen 1 (DE)
(74) Vertreter: Rehberg, Elmar, Dipl.-Ing.

(56) Entgegenhaltungen:
- CH-A- 653 211
- DD-A- 229 291
- DE-A- 2 711 352
- DE-B- 1 237 375
- GB-A- 659 781
- US-A- 3 722 196

## Beschreibung

Die Erfindung bezieht sich auf einen Mähbalken mit einem Balkenrücken, einem Balkenklingen aufweisenden Untermesser und mit einem angetriebenen Obermesser, das auf einem Messerrücken angeordnete Mähklingen und ein auch auf dem Messerrücken angeordnetes Antriebselement, insbesondere Messermitnehmer, aufweist, und mit über die Länge des Mähbalkens verteilten Niederhaltern, die jeweils an dem Balkenrücken um eine durch Winkelstücke auf dem Balkenrücken festgelegte, sich parallel zur Haupterstreckungsrichtung des Mähbalkens erstreckende und oberhalb des Balkenrückens liegende Achse derart schwenkbar angeordnet sind, daß das Obermesser ohne Demontage eines Antriebselementes vom Messerrücken nach vorn entnehmbar ist, und daß mindestens eine parallel zur Haupterstreckungsrichtung des Mähbalkens angeordnete Schraube zum Einstellen des Niederhalters vorgesehen ist. Solche Mähbalken sind Bestandteile von Mähmaschinen und dienen dazu, Gras, Luzerne und ähnliches Schnittgut zu mähen. Die vorliegende Erfindung bezieht sich auf einen Mähbalken, der auf jeden Fall ein angetriebenes Obermesser aufweist. Für die Erfindung spielt es keine Rolle, ob auch das Untermesser angetrieben wird; in der Regel wird jedoch das Untermesser mit dem Balkenrücken oder einer Tragschiene und den Balkenklingen stillstehend angeordnet sein, so daß sich das Obermesser relativ zum Untermesser bewegt.

Ein Mähbalken der eingangs beschriebenen Art ist aus DD-PS 229 291 bekannt. Es sind mehrere über die Länge des Mähbalkens verteilt angeordnete Niederhalter vorgesehen, die jeweils an dem Balkenrücken um eine durch Winkelstücke davon abstehende und sich parallel zur Haupterstreckungsrichtung des Mähbalkens erstreckende Achse schwenkbar angeordnet sind.

Dabei findet eine Dehnschraube Verwendung, die einen kleineren Durchmesser als eine Bohrung besitzt, die zur Lagerung des Niederhalters gehört. Zum Justieren des Niederhalters in allen Richtungen werden die so gebildeten Verstellwege zwischen Dehnschraube und Bohrung genutzt, so daß damit sowohl das Höhenspiel des Niederhalters als auch das sich in Fahrtrichtung ergebende Spiel zwischen den Teilen bei Eintritt von Verschleiß nachgestellt bzw. wegverstellt werden kann. Durch die Dehnschraube in Verbindung mit einem Schraubenkopf am einen Ende und einer der Dehnschraube zugeordneten Mutter sowie infolge des notwendigerweise vorhandenen reichlichen Spiels ist es möglich, aber auch zwangsweise miteinander gekoppelt erforderlich, bei jedem Messerwechsel jeden Niederhalter in den beiden Richtungen einzustellen und zu justieren, obwohl z. B. nur das Höhenspiel neu eingestellt werden müßte. Beim Lösen der Mutter geht nämlich in nachteiliger Weise die justierte, eingestellte Stellung nach allen Richtungen hin verloren, so daß selbst dann, wenn nur die Obermesser ausgebaut und beispielsweise nachgeschliffen werden sollen, bei Wiedereinsetzen der Obermesser eine sorgfältige und umständliche Neujustage nach allen Richtungen an jedem Niederhalter erforderlich wird. Nun kommt erfahrungsgemäß dem Höhenspiel eine andere Bedeutung zu als dem Spiel in Fahrtrichtung. Das Spiel in Fahrtrichtung muß in der Regel nur wenige Male während der gesamten Nutzungsdauer eines Mähbalkens nachjustiert werden. Ein Spiel der Teile zueinander in Fahrtrichtung in der Größenordnung von 1 bis 2 mm kann durchaus als zulässig angesehen werden und erfordert noch keine Nachjustage, weil dieses Spiel in Fahrtrichtung die Schneidwirkung der Messer nicht beeinflußt, sondern sich nur auf die Leichtgängigkeit des Obermessers, auf Klappergeräusche sowie auf Verschleiß in dieser Richtung auswirkt. Das Höhenspiel hingegen, also das Spiel senkrecht zur Schnittebene, wie es insbesondere zwischen Niederhalter und Obermesser auftritt, ist ungleich bedeutungsvoller, da es sich unmittelbar auf das ordnungsgemäße Schneiden zwischen Obermesser und Untermesser auswirkt. Hier können Spiele allenfalls in der Größenordnung von etwa 0,1 bis 0,2 mm zugelassen werden, so daß bei einem wesentlich geringeren Verschleiß bereits eine Nachstellung erforderlich ist. Praktisch ist es bei jedem Nachschleifvorgang des Obermessers erforderlich, das Höhenspiel neu einzustellen.

Aus der DE-B 12 37 375 ist ein Mähwerk mit einem Fingerbalken vorgesehen, bei dem die dem Balkenrücken zugeordnete Reibeplatte mit Hilfe von Befestigungsschrauben und sich in Fahrtrichtung erstreckenden Langlöchern nachstellbar befestigt ist. Die Reibeplatte besitzt zugleich ein vertikal abstehendes Winkelstück, das zur Lagerung je eines Niederhalters dient. In den Winkelstücken und in den Niederhaltern sind sich kreuzende Langlöcher sowie zwei Spannschrauben vorgesehen, so daß auf diese Art und Weise ein genaues Justieren der Niederhalter in beiden Richtungen möglich ist. Die Niederhalter sind sowohl in vertikaler als auch in horizontaler Richtung - durch Betätigung der zwei Spannschrauben zwangsweise gekoppelt - vorstellbar. Diese Einstellungsarbeit muß besonders sorgfältig durchgeführt werden und ist aufwendig. Sie ist bei jedem Lösen der Niederhalter zum Zweck des Messerwechsels erforderlich. In einer weiteren Ausführungsform sind die Niederhalter geteilt ausgebildet. Der dem Winkelstück zugekehrte Teil des Niederhalters ist auch hier durch die zwei Spannschrauben in Verbindung mit sich in Fahrtrichtung erstreckenden Langlöchern sowohl in vertikaler als auch in horizontaler Richtung verstellbar. Zwischen den beiden Teilen des Niederhalters ist ein einstellbares Gelenk vorgesehen, um eine weitere Anpassung an die jeweilige Lage der Messer bzw. an den Grad des eingetretenen Verschleisses zu erreichen. Das Gelenk erstreckt sich mit seiner Achse quer zur Fahrtrichtung und liegt etwa oberhalb der Abkantungen der Reibeplatte und einer zum Obermesser gehörenden Führungsleiste. Die Hebelarme der Teile des Niederhalters und die Gelenkpositionierung ist jedoch so durchgeführt, daß es selbst beim Lösen des Gelenks nicht möglich ist, das Obermesser frei nach oben abzuheben und - bedingt durch den kleinen Schwenkradius des dem Obermesser zugekehrten Teils des Niederhalters - allein durch Lösen des Gelenks eine flächige Auflage des Niederhalters auf der Führungsleiste des Obermessers zu erreichen; für eine flächige Auflage müssen auch hier die beiden Spannschrauben gelöst und damit auch das Spiel in horizontaler Richtung unnötigerweise neu eingestellt werden. In einer weiteren aufgezeigten Möglichkeit mit ebenfalls geteiltem Niederhalter sind horizontale Langlöcher und zwei Spannschrauben einmal zum Einstellen des Spiels in Fahrtrichtung und gesondert dazu vertikale Langlöcher und zwei weitere Spannschrauben zum Einstellen des Höhenspiels allein vorgesehen. Die Einstellung des Höhenspiels erfordert jedoch viel Geschick und Erfahrung und ist davon abhängig, ob es während des Festziehens der beiden weiteren Spannschrauben gelingt, das gewünschte Spiel aufrecht zu erhalten. Der bekannte Mähbalken gestattet zwar eine vielfache Einstellung und Nachstellung. Diese Justagearbeiten sind jedoch aufwendig und müssen nach jedem Messerwechsel erneut durchgeführt werden.

Der Erfindung liegt die Aufgabe zugrunde, einen Mähbalken der eingangs beschriebenen Art bereitzustellen, bei dem es wie bisher einerseits möglich ist, die Niederhalter aufzuklappen und das Obermesser ohne Demontage eines Antriebselements nach vorn zu entnehmen bzw. von vorn einzusetzen, bei dem aber trotz aufklappbarer Niederhalter das Höhenspiel der Niederhalter gleichsam automatisch und ohne Anwendung besonderer Sorgfalt ausgeglichen bzw. nachgestellt wird.

Erfindungsgemäß wird dies dadurch erreicht, daß jeder Niederhalter in einer kein nennenswertes Spiel aufweisenden Schwenklagerung um die definierte Achse schwenkbar gelagert ist, und daß die Schraube ausschließlich für die Blockierung bzw. Freigabe der Schwenkbewegung jedes Niederhalters und damit ausschließlich zur Verstellung des Höhenspiels vorgesehen ist.

Die Schwenklagerung ist dabei kein einstellbares Gelenk, dessen Spiel oder Verstellweg zu Ein- und Nachstellzwecken benutzt wird, sondern die Schwenklagerung weist kein nennenswertes Spiel auf, sondern gestattet lediglich die Verschwenkung der Niederhalter um die durch die Winkelstücke definierte Achse oberhalb des Balkenrückens. Die der Schwenklagerung zugeordnete Schraube bzw. die Schrauben/Muttern-Verbindung dient ausschließlich der Blockierung bzw. Freigabe der Schwenkbewegung. Diese Schraube kann die mit ihrem Schaft die definierte Achse bildende Schraube sein. Es ist aber auch möglich, eine oder mehrere gesonderte Schrauben vorzusehen, deren Achse parallel und mit Abstand zu der definierten Achse der Schwenklagerung verläuft. Das Festziehen der Schraube wirkt sich auf das geringfügige Spiel, wie es für die Schwenklagerung erforderlich ist, in keiner Weise aus, d. h. dieses geringfügige oder nicht nennenswerte Spiel wird weder hinwegverstellt noch nachgestellt noch beseitigt. Mit der Blockierung bzw. Freigabe der Schwenkbewegung wird ausschließlich dem Höhenspiel Rechnung getragen, d. h. beim Festziehen der Schraube wird in besonders einfacher Weise - gleichsam automatisch - das Höhenspiel beseitigt bzw. auf einen solchen Wert eingestellt, wie er für die Gleitbeweglichkeit des Obermessers relativ zum Untermesser erforderlich ist. Das Spiel in Fahrtrichtung zwischen der Reibeplatte und der Führungsleiste wird hiervon nicht beeinflußt. Dieses Spiel in Fahrtrichtung muß sehr viel weniger oft nachgestellt werden, weil sich dieses Spiel auf die Schnittarbeit kaum auswirkt, während andererseits das Höhenspiel für die Schnittarbeit entscheidend ist. Die Demontage und die Montage des Obermessers gestalten sich bei der erfindungsgemäßen Ausbildung besonders einfach. Es ist lediglich erforderlich, die Mutter der Muttern/Schrauben-Verbindung, die den Niederhalter hält, um eine halbe bis eine Umdrehung loszuschrauben, so daß der eingeklemmte Niederhalter frei beweglich und damit definiert schwenkbar um seine Lagerachse ist. Jeder Niederhalter läßt sich dann mindestens um etwa 90° - vorzugsweise um mehr als 180° - aufschwenken bzw. aufklappen, so daß das Obermesser mit seinem Antriebselement, insbesondere dem Messermitnehmer, nach vorn aus dem Mähbalken herausgenommen werden kann. Das Antriebselement muß nicht gelöst werden. Besonders einfach gestaltet sich auch dann die Montage des Obermessers, nachdem es beispielsweise nachgeschliffen worden ist. Dieses Obermesser wird von vorn zwischen die umgeklappten Niederhalter und das Untermesser eingesetzt. Die Niederhalter werden um ihre Lagerachse in Richtung auf das Obermesser definiert niedergeschwenkt und in der niedergeschwenkten Stellung festgehalten und angepreßt, wobei das Höhenspiel beim Festziehen der Schraube automatisch richtig eingestellt wird. Eine besonders einfache Einstellung ergibt sich automatisch dann, wenn das zum Blockieren des Niederhalters auf die Mutter der Schraube auszuübende Moment um die Schwenklagerung entgegen der Klapprichtung des Niederhalters einwirkt. Es versteht sich, daß der Niederhalter während dieses Festziehens der Mutter von Hand niedergehalten werden muß. Dabei erfolgt die automatische Anpassung und das Wegverstellen des Höhenspiels, welches durch den verschleißbedingten Materialabtrag verursacht wurde. Nach Wegnahme des Festziehdrehmoments erfolgt ein Rückfedern des Niederhalters bzw. am gesamten Mähbalken, so daß automatisch das für die Gleitbewegung des Obermessers erforderliche und sinnvolle Spiel entsteht. Die Wegnahme des Drehmoments auf die Schrauben/Muttern-Verbindung genügt also, um ein sinnvolles und ausreichendes Spiel zwischen dem Niederhalter und dem Obermesser zu erreichen, so daß das Obermesser einerseits leichtgängig bewegbar gelagert ist und sich andererseits ein einwandfreies Schneiden zwischen den Klingen des Ober- und des Untermessers einstellt. Mit diesem unerwarteten Vorteil wird gleichsam die automatisch richtige Anstellung der Niederhalter erreicht, ohne daß eine besondere Feinfühligkeit, Geschicklichkeit oder Erfahrung erforderlich wäre. Die Handhabung ist gegenüber dem Stand der Technik wesentlich erleichtert. Die Demontage und die Montage können damit auch in vergleichsweise kürzerer Zeit durchgeführt werden. Der Verschleiß wird automatisch mit hinweggestellt, ohne daß die Verwendung von Beilagescheiben oder die relative Justierung des Höhenspiels und des Spiels in Fahrtrichtung erforderlich wäre.

Zur Einstellung des Spiels in Fahrtrichtung kann eine gesonderte Ver- und Einstelleinrichtung vorgesehen sein, die zwischen dem Balkenrücken und die definierte Achse eingeschaltet ist. Die Reibeplatte und die Winkelstücke zur Auflagerung der Schwenklagerung sind voneinander getrennte Bauteile, so daß die Einstellung des Spiels in Fahrtrichtung nicht zugleich eine Zwangsverstellung des Niederhalters in Fahrtrichtung bedeutet, die dann wieder durch einen gesonderten Einstellvorgang beseitigt werden müßte. Die Einstellung des Spiels in Fahrtrichtung ist im Vergleich zum Höhenspiel nur selten zu betätigen, so daß die Unabhängigkeit der beiden Verstelleinrichtungen voneinander vorteilhaft ist. Eine besonders einfache Ausführungsform besteht darin, daß die gesonderte Ver- und Einstelleinrichtung mindestens zwei am Balkenrücken angreifende Befestigungsschrauben und sich in Fahrtrichtung erstreckende Langlöcher aufweist. Diese Langlöcher sind nicht in den Elementen vorgesehen, die die definierte Achse der Schwenklagerung bestimmen, sondern die Langlöcher sind im Bereich der Reibeplatte untergebracht, die relativ zur Führungsleiste in Fahrtrichtung verstellbar ist. Die zugehörigen Befestigungsschrauben werden normalerweise, d. h. bei einem Wechsel des Obermessers, nicht betätigt.

Die Ausbildung der Niederhalterlagerung und der Verklemmung des Niederhalters wird dann besonders einfach, wenn pro Niederhalter nur eine Schraube vorgesehen ist und der Schraubenschaft zugleich die definierte Achse für die Verschwenkung des Niederhalters bildet. Auch dabei ist zwischen dem Schraubenschaft und dem Niederhalter im Bereich der Schwenklagerung kein nennenswertes Spiel vorhanden. Es ist möglich, den Niederhalter im Bereich zweier Stirnflächen reibend zu klemmen, indem jedoch nur eine einzige Schrauben/Muttern-Verbindung angezogen wird.

Zwischen jedem Niederhalter und den Mähklingen des Obermessers kann eine Führungsleiste vorgesehen sein und der Führungsleiste kann eine Reibeplatte zugeordnet sein, die auf dem Balkenrücken angeordnet ist und die Langlöcher aufweist. Durch die Führungsleiste wird einmal erreicht, daß der Niederhalter nicht direkt auf den Mähklingen aufliegt, sondern auf der Führungsleiste. Für die Führungsleiste kann eine Gestaltung und ein Werkstoff gewählt werden, der den Anforderungen an die Gleitreibung besser genügt als die Mähklingen. Insbesondere kann durch eine wulstartige Gestaltung der Führungsleiste eine Vergrößerung der Gleitfläche erreicht werden. Die Führungsleiste weist zweckmäßig weiterhin eine rückwärtige Abkantung als Führungsfläche auf. Diese Abkantung kann sich in einem Winkel von 35° erstrecken. Die Führungsleiste arbeitet dazu zweckmäßig mit einer entsprechend gestalteten Reibeplatte zusammen, die ebenfalls eine Abkantung aufweist und damit der Führungsleiste zugeordnet ist. Die Reibeplatte ist im Bereich des Balkenrückens gelagert und über die bereits beschriebenen Langlöcher in Fahrtrichtung einstellbar.

Jedem Niederhalter können als die definierte Achse festlegende Elemente zwei Langlöcher tragende Winkelstücke zugeordnet sein, die auf dem Balkenrücken gelagert sind und aus der Schnittebene vorstehende Schenkel aufweisen, die sich parallel zur Arbeitsrichtung erstrecken. Statt der Anordnung von Langlöchern in den Winkelstücken ist es auch möglich, die Winkelstücke ortsfest mit dem Balkenrücken zu verbinden, beispielsweise zu verschweißen. Die Winkelstücke und damit die definierte Achse der Schwenklagerung sind dann ein für alle Mal festgelegt. Eine Verstellung in Fahrtrichtung ist hier nicht erforderlich. Eine entsprechende Beweglichkeit und Einstellbarkeit der Reibeplatte ist ausreichend. Die beiden Schenkel der Winkelstücke werden dann von der Schrauben/Muttern-Verbindung durchsetzt und bilden eine Klemmfläche für den Niederhalter, der in dem entsprechenden Bereich eingerollt ausgebildet ist oder einen Rohr- oder Hülsenabschnitt aufweist, so daß hier die entsprechenden Gegenflächen für die Einklemmung des Niederhalters gebildet ist.

Für die Relativanordnung der Schrauben/Mutter-Verbindung, die die Einklemmung des Niederhalters bewirkt, ergeben sich zwei Möglichkeiten: wenn die Anordnung so getroffen ist, daß die Anzugsrichtung der Schrauben/Muttern-Verbindung mit der Niederhalterichtung des Niederhalters übereinstimmt, entsteht nach dem Anziehen und der Wegnahme des Anzugsmoments ein kleines Spiel am Niederhalter, das für die Beweglichkeit des Obermessers gerade sinnvoll ist und ausreicht. Dies gilt insbesondere für weiches Schnittgut, wie übliche Grassorten.

Andererseits ist es aber auch möglich, die Schrauben/Muttern-Verbindung so relativ anzuordnen, daß die Anzugsrichtung der Schrauben/Muttern-Verbindung entgegengesetzt der Niederhalterichtung des Niederhalters übereinstimmt, entsteht nach dem Anziehen und der Wegnahme des Anzugsmoments eine spielfreie Einstellung mit leichter Vorspannung am Niederhalter. Diese Einstellung ist insbesondere für das Mähen von Ölsaaten sinnvoll, bei dem kein Höhenspiel in den Führungen zuzulassen ist.

In den meisten Fällen ist es jedoch vorteilhaft, die Schrauben/Muttern-Verbindung so relativ anzuordnen, daß die Anzugsrichtung der Schrauben/Muttern-Verbindung entgegengesetzt zur Aufklapprichtung des Niederhalters gerichtet ist, also in Wirkrichtung der Niederhalter. In diesem Fall entsteht gleichsam automatisch das für die Gleitbeweglichkeit des Obermessers richtig bemessene geringe Spiel. Die beiden oben beschriebenen Relativanordnungen sind unabhängig davon möglich, ob jedem Niederhalter nur eine oder auch mehrere Schrauben zugeordnet sind. Bei der Verwendung mehrerer Schrauben ist auch eine kombinierte Relativanordnung möglich.

Die Schraube kann zweckmäßig als Schloßschraube ausgebildet sein, d. h. auf einem Bereich ihres Schafts einen unrunden, insbesondere quadratischen, Querschnitt aufweisen. Es versteht sich, daß dann im Steg des Winkels eine entsprechende Durchbrechung vorgesehen ist. Ziel dieser Maßnahme ist es, die Schrauben/Muttern-Verbindung hinsichtlich der Schraube verdrehgesichert zu lagern, damit beim Anziehen oder Losschrauben das betreffende Drehmoment mit einer Hand aufgebracht werden kann und ein Gegenhalten nicht erforderlich ist. Damit ergibt sich zugleich die Möglichkeit, mit der anderen Hand den betreffenden Niederhalter während des Anziehens der Mutter auf die Führungsleiste niedergepreßt zu halten, also reproduzierbare Ausgangsverhältnisse beim Einklemmen der Niederhalter durch nur eine Person herzustellen.

Der Niederhalter kann zweckmäßig seitlich Klemmflächen aufweisen, die mit erhöhter Rauhigkeit vorgesehen sind. Diese Klemmflächen kommen beim Anziehen der Schrauben/Muttern-Verbindung mit den entsprechenden Gegenflächen an den Schenkeln der Winkel zur Anlage. Wichtig ist es, daß es sich um eine fein strukturierte Rauhigkeit handelt, die ein Festklemmen des Niederhalters in jeder beliebigen Relativlage gestattet. Das Festklemmen muß in diesem Sinn stufenlos möglich sein. Falsch wäre es, an dieser Stelle eine grobe, zahnartige Ausbildung der beiden in Klemmkontakt kommenden Flächen vorzusehen, so daß nur eine stufenweise Relativverstellung und Einklemmung möglich wäre.

Besonders vorteilhaft ist es, wenn zwischen dem Steg des Winkels und dem Niederhalter harte Zwischenscheiben vorgesehen sind, deren Kontaktflächen rauh ausgebildet sind. Es besteht dann die Möglichkeit, für den Niederhalter und den Winkel relativ weiche Werkstoffe zu verwenden, wobei sich beim Anziehen die rauhen Kontaktflächen der Zwischenscheiben in die entsprechenden Gegenflächen an dem Niederhalter und an den Winkeln eingraben, ohne daß damit die stufenlose Einklemmung beseitigt wäre.

Die Erfindung wird anhand bevorzugter Ausführungsbeispiele weiter erläutert und beschrieben. Es zeigen:
- Figur 1: eine perspektivische Darstellung eines Teils des Mähbalkens,
- Figur 2: eine Seitenansicht des Mähbalkens gemäß Figur 1, teilweise geschnitten, gemäß der Linie II-II in Figur 3,
- Figur 3: eine Auflagerungsmöglichkeit des Niederhalters,
- Figur 4: eine andere Ausbildung des Niederhalters,
- Figur 5: eine Seitenansicht einer weiteren Ausführungsform des Niederhalters,
- Figur 6: die Lagerung des Niederhalters gemäß Figur 5,
- Figur 7: eine weitere Ausführungsform des Niederhalters,
- Figur 8: die Lagerung des Niederhalters gemäß Figur 7,
- Figur 9: einen Schnitt durch den Mähbalken gemäß den Figuren 1 bis 3,
- Figur 10: eine ähnliche Darstellung wie die Figuren 3, 4 und 6 bei einer anderen Ausführungsform des Mähbalkens,
- Figur 11: einen Schnitt gemäß der Linie XI-XI in Figur 10,
- Figur 12: eine ähnliche Darstellung wie Figur 9 bei einer weiteren Ausführungsform,
- Figur 13: einen Schnitt gemäß der Linie XIII-XIII in Figur 12,
- Figur 14: eine weitere Schnittdarstellung durch eine weitere Ausführungsform und
- Figur 15: einen Schnitt gemäß der Linie XV-XV in Figur 14.

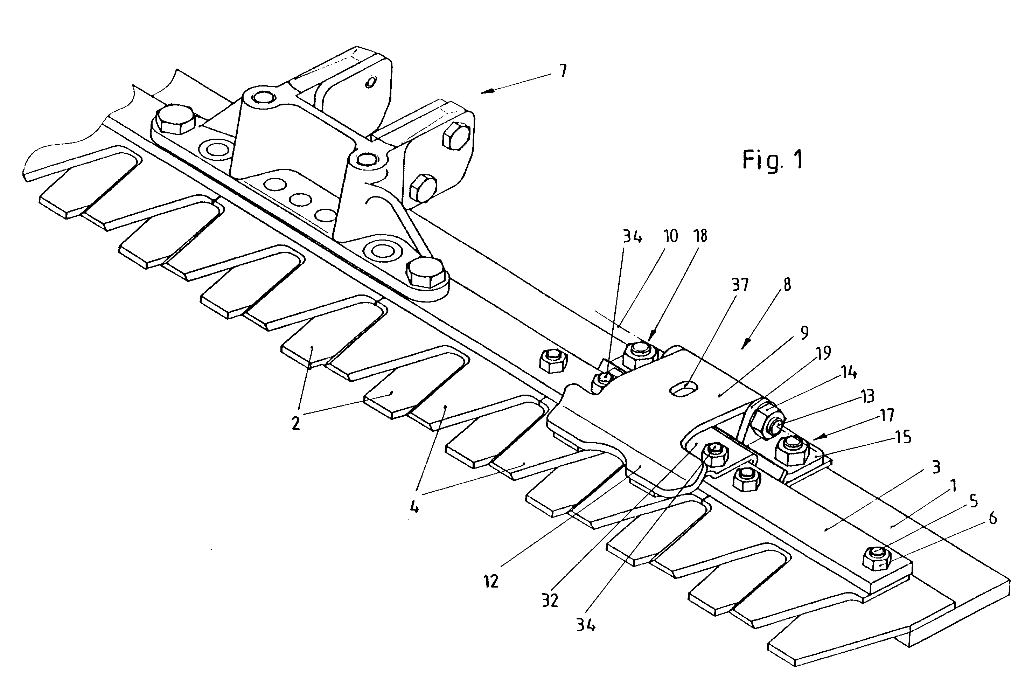

In Figur 1 ist in perspektivischer Darstellung der für das Verständnis der Erfindung wesentliche Teil eines Mähbalkens dargestellt. Der Mähbalken weist einen Balkenrücken 1 aus einer flachen, über die Breite des Mähbalkens durchgehenden Schiene auf, die zugleich rahmenartige Tragfunktion für den Mähbalken hat. Mit diesem Balkenrücken 1, der stillstehend vorgesehen ist und beispielsweise mit einer fahrbaren Einheit verbunden wird, sind sich quer über die Arbeitsbreite erstreckende Balkenklingen 2 verbunden, die mit dem Balkenrücken 1 vernietet oder verschraubt sind. Die Balkenklingen 2 sind somit ebenfalls stillstehend angeordnet. Balkenrücken 1 und Balkenklingen 2 bilden das Untermesser.

Es ist ein Messerrücken 3, ebenfalls als flache, über die Arbeitsbreite durchgehende Schiene vorgesehen, mit dem Mähklingen 4 verbunden, insbesondere vernietet oder verschraubt, sind. Die Mähklingen 4 sind als Doppelklingen ausgebildet und jeweils über zwei Schrauben 5 mit zugehöriger Mutter 6 befestigt. Mit dem Messerrücken 3 ist weiterhin ein Antriebselement 7 verbunden, insbesondere verschraubt, welches in an sich bekannter Weise als Messermitnehmer ausgebildet ist. Über dieses Antriebselement 7 wird der hin- und hergehende Antrieb auf den Messerrücken 3 und damit die Mähklingen 4 übertragen, so daß sich das Obermesser aus dem Messerrücken 3 und den Mähklingen 4 relativ zu dem stillstehenden Untermesser aus Balkenrücken 1 und Balkenklingen 2 hin- und herbewegt und damit die Schnittarbeit ausführt.

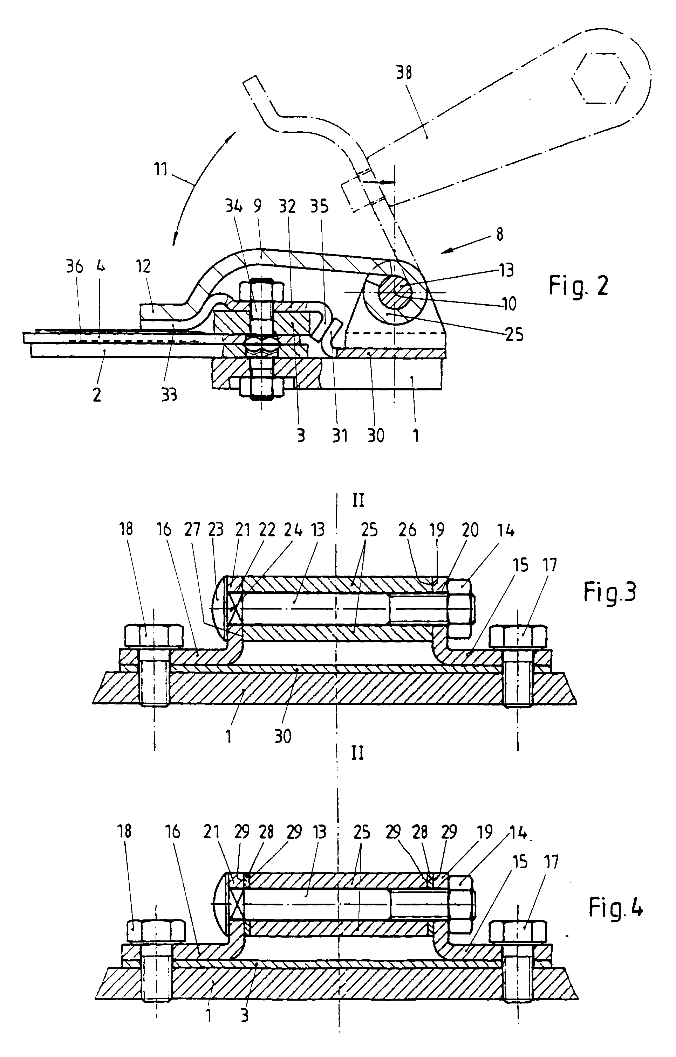

Über die Arbeitsbreite des Mähbalkens verteilt sind eine Anzahl Niederhalter 8 vorgesehen, von denen in Figur 1 nur einer dargestellt ist. Jeder Niederhalter 8 besitzt eine Niederhalteplatte 9 als wesentliches Element, die die aus den Zeichnungen ersichtliche Gestaltung und Ausbildung aufweist. Die Niederhalteplatte 9 kann vorzugsweise als Stanz- und Preßteil ausgebildet sein. Die Niederhalteplatte 9 ist um eine definierte Achse 10 schwenkbar bzw. umklappbar gelagert, und zwar ohne nennenswertes Spiel bzw. nur mit einem solch kleinen Spiel, wie es für die Schwenklagerung erforderlich ist. Die Achse 10 erstreckt sich parallel zur Haupterstreckungsrichtung des Balkenrückens 1 bzw. Parallel zur Schnittebene über die Arbeitsbreite des Mähbalkens. Damit ergibt sich eine Schwenkbeweglichkeit für die Niederhalteplatte 9, die am besten aus Figur 2 verständlich wird. Die Niederhalteplatte 9 läßt sich um einen Winkel 11, der hier mehr als 180° betragen kann, verschwenken. In der einen Endstellung, bei der das vordere Ende 12 der Niederhalteplatte 9 auf dem Obermesser aufliegt, erfüllt der Niederhalter 8 seine Führungsfunktion für die Festlegung der möglichen Bewegungsrichtung des Obermessers relativ zum Untermesser. In der anderen Stellung, der nach hinten abgeklappten Stellung, wird das Obermesser aus Messerrücken 3 und Mähklingen 4 frei beweglich, insbesondere nach vorn herausnehmbar bzw. von dem Balkenrücken 1 entfernbar.

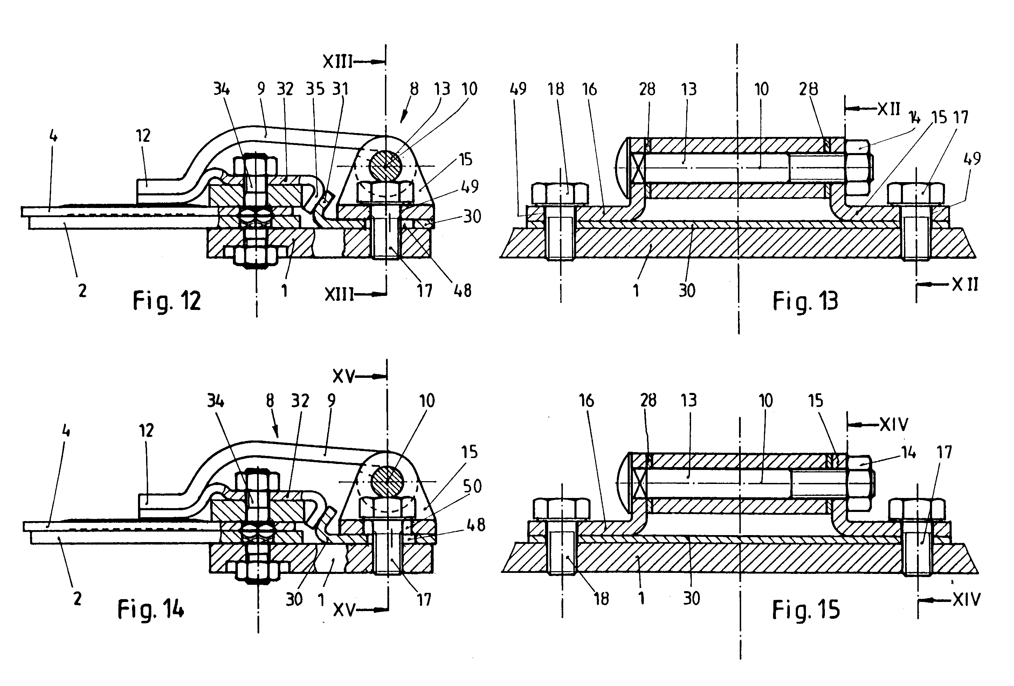

Zu jedem Niederhalter 8 gehört noch mindestens eine Schraube 13 mit zugehöriger Mutter 14 für die Blockierung bzw. Freigabe der Schwenkbewegung jedes Niederhalters 8 sowie zwei Winkelstücke 15 und 16 sowie Befestigungsschrauben 17 und 18. Die Befestigungsschraube 17, die eigentlich eine Schrauben/Muttern-Verbindung darstellt, dient zur Befestigung des Winkelstücks 15 auf dem Balkenrücken 1 und wird beim Austausch des Obermessers nicht gelöst. Entsprechend ist das Winkelstück 16 mit der Befestigungsschraube 18 auf dem Balkenrücken 1 befestigt. Es ist auch möglich, zur Befestigung lediglich Schrauben vorzusehen und die entsprechenden Durchdringungslöcher in dem Balkenrücken 1 mit Gewinde zu versehen, wie dies insbesondere aus den Figuren 3 und 4 hervorgeht. Die Winkelstücke 15 und 16 können langlochartige Durchbrechungen (Figur 14) besitzen, um eine Einstellung und Positionierung der definierten Achse 10 relativ zur Fahrt- bzw. Arbeitsrichtung zu ermöglichen. Das Winkelstück 15 besitzt einen nach oben abgewinkelten Steg 19 mit einer auf den Durchmesser der Schraube 13 abgestimmten kreisrunden Durchbrechung 20 entsprechenden Durchmessers (Figur 3), so daß die Schraube 13 durch die Durchbrechung 20 hindurchreichen kann. Auch das Winkelstück 16 besitzt bei ansonsten etwa spiegelsymmetrischer Ausbildung einen nach oben abgewinkelten Steg 21 mit einer unrunden, insbesondere quadratischen Umriß aufweisenden Durchbrechung 22. Die Schraube 13 ist so ausgebildet, daß im Anschluß an ihren Kopf 23 ein unrunder Bereich 24 vorgesehen ist, dessen Querschnittsausbildung auf die Formgebung der Durchbrechung 22 abgestimmt ist. Die Schraube 13 ist damit insbesondere als sogenannte Schloßschraube ausgebildet. Man erkennt, daß die Schraube 13 insoweit in den Winkelstücken 15 und 16 verdrehgesichert gelagert ist, so daß es zum Anziehen der Mutter 14 oder zum Lösen nur der Aufbringung eines entsprechenden Drehmoments in der entsprechenden Richtung auf die Mutter 14 bedarf und somit dieses Aufbringen des Drehmoments mit einer Hand durch die Bedienungsperson möglich ist. Wenn die Mutter 14 festgezogen wird, wird der Niederhalter 8 mit seiner Niederhalteplatte 9 eingeklemmt, also die Schwenkbeweglichkeit gemäß Winkel 11 beseitigt. Wird die Mutter 14 um eine halbe bis eine Umdrehung gelöst, ohne sie von der Schraube 13 zu entfernen, dann wird die Einklemmung der Niederhalteplatte 9 aufgehoben und die Schwenkbeweglichkeit gemäß Winkel 11 ist gegeben.

Die Niederhalteplatte 9 weist in ihrem hinteren Bereich einen eingerollten Abschnitt 25 auf, der den Schaft der Schraube 13 weitgehend umgibt und damit die Funktion einer Lagerhülse o. dgl. erbringt. Diese Schwenklagerung weist kein nennenswertes Spiel auf. Der Abschnitt 25 weist an beiden Seiten stirnseitig Klemmflächen 26, 27 auf, die fein strukturiert aufgeraut sind und mit den entsprechenden Gegenflächen der Winkel 15 bzw. 16 zusammenarbeiten. Diese Rauhigkeit ist derart ausgebildet, daß der Niederhalter 8 bzw. die Niederhalteplatte 9 stufenlos in jeder Stellung gemäß Winkel 11 fest- bzw. einklemmbar ist. Dies zielt darauf ab, auf diese Weise für eine Nachstellung bzw. Hinwegverstellung des eintretenden Verschleißes zu sorgen. Auch die Gegenflächen an den Winkelstücken 15 und 16 können entsprechend ausgebildet sein. So ist es möglich, beispielsweise die Klemmflächen 26 und 27 hart und die entsprechenden Gegenflächen an den Stegen 19 und 21 weich auszubilden, um ein stufenloses Festklemmen zu ermöglichen. Auch eine umgekehrte Anordnung oder eine andersartige Abstimmung aufeinander ist möglich. Figur 4 zeigt eine Ausführungsform, bei der sowohl die Niederhalteplatte 9 als auch die Winkelstücke 15 und 16 aus vergleichsweise weichem Stahl hergestellt sind. Es sind hier Zwischenscheiben 28 vorgesehen, die aus vergleichsweise hartem Stahl bestehen und deren Kontaktflächen 29 auf beiden Seiten entsprechend rauh ausgebildet sind, so daß die entsprechende Einklemmung möglich wird. Hier tritt sogar der besondere Vorteil auf, daß sich die spezielle Ausbildung der fein strukturierten Rauhigkeit nur auf vergleichsweise kleine Zwischenscheiben 28 erstreckt.

Die Winkelstücke 15 und 16 mit den Befestigungsschrauben 17 und 18 können gleichzeitig dazu dienen, um auf dem Balkenrücken 1 im Bereich jedes Niederhalters 8 je eine Reibeplatte 30 zu lagern bzw. festzuklemmen, die Führungsfunktion erbringt und entlang ihrer nach vorn gerichteten Kante eine Abkröpfung 31 aufweist. Im Bereich des Obermessers kann entsprechend eine Führungsleiste 32 vorgesehen sein, deren vorderes Ende 33 zur Vergrößerung einer Gleitreibungsfläche geschwungen ausgebildet und auf die Formgebung des vorderen Endes 12 der Niederhalteplatte 9 abgestimmt ist. Über Schrauben 34 ist die Führungsleiste 32 auf dem Messerrücken 3 gelagert und gehalten, so daß sich das vordere Ende 33 zwischen der Oberseite der Mähklingen 4 und dem vorderen Ende 12 der Niederhalteplatte 9 erstreckt. Die Relativbewegung findet damit zwischen dem vorderen Ende 12 der Niederhalteplatte 9 und dem vorderen Ende 33 der Führungsleiste 32 statt. Am hinteren Ende besitzt die Führungsleiste 32 eine Abkröpfung 35, die in Ausbildung und Winkelanordung auf die Abkröpfung 31 der Reibeplatte 30 ausgebildet ist. Der Winkel der Abkröpfungen 31 und 35 zu der Schnittebene 36, wie sie durch die Balkenklingen 2 und die Mähklingen 4 definiert wird, beträgt etwa 35°. Es versteht sich, daß die Reibeplatte 30 und/oder die Führungsleiste 32 (nicht dargestellte) langlochartige Durchbrechungen für die Schrauben 17 und 18 bzw. 34 aufweisen kann, wobei sich die Hauptachse dieser Langlöcher in Arbeitsrichtung erstreckt. Auf diese Weise ist es möglich, die Relativeinstellung der Teile zur Arbeitsrichtung zu verstellen bzw. zu verändern, ohne die Einstellung des Höhenspiels zu beeinträchtigen oder mitzuverstellen.

Bei der Ausführungsform des Mähbalkens, wie er in den Figuren 1 bis 3 dargestellt ist, erfolgt die Demontage des Obermessers wie folgt: die Muttern 14 sämtlicher Niederhalter 8 werden um eine halbe oder eine Umdrehung losgedreht, bis die Klemmung der Niederhalteplatten 9 aufgehoben ist. Anschließend werden sämtliche Niederhalteplatten 8 um mindestens 180° nach hinten verschwenkt (vgl. Figur 2) und das Obermesser aus Messerrücken 3 und Mähklingen 4 kann nun frei nach vorn herausgenommen werden. Es folgt die entsprechende Serviceleistung, beispielsweise das Nachschleifen der Mähklingen 4. Anschließend wird das Obermesser von vorn wieder eingesetzt und die Niederhalteplatten 9 sämtlicher Niederhalter 8 werden in die Lage zurückverschwenkt, die in Figur 1 verdeutlicht ist. Es empfiehlt sich, die Niederhalteplatte 9 im Bereich des vorderen Endes 12 auf die Führungsleiste 32 anzudrücken und mit der anderen Hand mit Hilfe eines Schraubenschlüssels die Mutter 14 der Schraube 13 festzuziehen, bis die Klemmung der Niederhalteplatte 9 eintritt. Nachdem das Drehmoment auf die Mutter 14 weggenommen wurde, erfolgt eine kleine Rückstellung der insgesamt bis zu gewissem Grade elastischen Teile. Diese Rückstellung reicht aus, um zwischen dem vorderen Ende 12 der Niederhalteplatte 9 und dem vorderen Ende 33 der Führungsleiste 32 ein Spiel entstehen zu lassen, welches für die Beweglichkeit des Obermessers erforderlich ist. Dieses Spiel ergibt sich gleichsam automatisch und läßt sich durch die konstruktive Ausbildung der Elastizität reproduzierbar vorbestimmen. Es versteht sich, daß die Einstellung bzw. Festklemmung im Bereich sämtlicher Niederhalter 8 nacheinander durchgeführt wird.

Bei der Ausführungsform der Figuren 1 bis 3 ist die Relativanordnung der Schraube 13 mit der Mutter 14 so getroffen, daß das Anziehdrehmoment entgegengesetzt zu der Niederhalterichtung des Niederhalters 8 verläuft. Bei dieser Anordnung wird eine spielfreie Einstellung mit leichter Vorspannung der Niederhalter 8 und der zugeordneten Führungsleiste 32 automatisch richtig eingestellt. Andererseits besteht die Möglichkeit, die Winkelstücke 15 und 16 mitsamt der Schrauben 13 und 14 gegeneinander vertauscht einzubauen, und zwar so, daß die Schraube 13 gleichsam um 180° gedreht ist und dabei das Anziehdrehmoment in seiner Anzugsrichtung der Mutter 14 mit der Niederhalterichtung des Niederhalters 8 übereinstimmt. In diesem Fall entsteht beim Einklemmen bzw. nach dem Wegnehmen des Anzugsdrehmoments ein kleines Spiel, wie es für die meisten Mäharbeiten sinnvoll ist.

Zum erleichterten Verschwenken der Niederhalteplatte 9 in nicht eingeklemmtem Zustand kann die Niederhalteplatte 9 ein Loch 37 aufweist, welches auf den Eingriff eines Verschwenkwerkzeugs 38 abgestimmt ist. Das Verschwenkwerkzeug 38 kann als kombiniertes Werkzeug eine Schlüsselfläche für die Muttern 14 oder auch weitere Schrauben aufweisen.

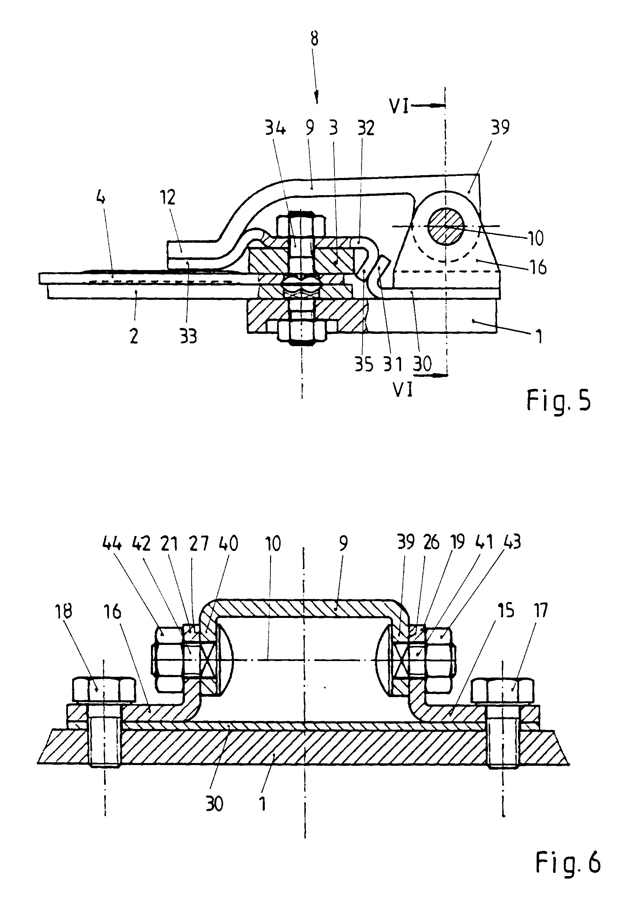

Die weitere Ausführungsform der Niederhalter 8 des Mähbalkens, wie sie in den Figuren 5 und 6 dargestellt ist, ist an sich ähnlich aufgebaut wie bei dem Ausführungsbeispiel der Figuren 1 bis 3. An der Niederhalteplatte 9 fehlt jedoch ein eingerollter Abschnitt 25. Stattdessen sind zwei seitlich angeordnete, umgebogene Lagerohren 39 und 40 vorgesehen, die auf ihrer Außenseite die Klemmflächen 26 und 27 bilden. Auch diese Schwenklagerung besitzt die definierte Achse 10 und kein nennenswertes Spiel. Die durchgehende Schraube 13 ist hier durch zwei Schloßschrauben 41 und 42 mit jeweils zugeordneter Mutter 43 bzw. 44 ersetzt. Bei dieser Ausführungsform sind die beiden Anzugsrichtungen der Muttern 43 und 44 gegeneinander gerichtet, so daß sich an der Niederhalteplatte 9 in montiertem Zustand ein Spiel zum Obermesser einstellt, welches mit seinem Betrag etwa zwischen den Beträgen der beiden zuvor beschriebenen Spiele liegt. Bei der Montage, also beim Einklemmen der Niederhalteplatte 9, ist es nicht unbedingt erforderlich, das vordere Ende 12 während des Anziehens der beiden Muttern 43 und 44 niedergedrückt zu halten. Unter Umständen genügt es bereits, lediglich die Schwerkraft einwirken zu lassen.

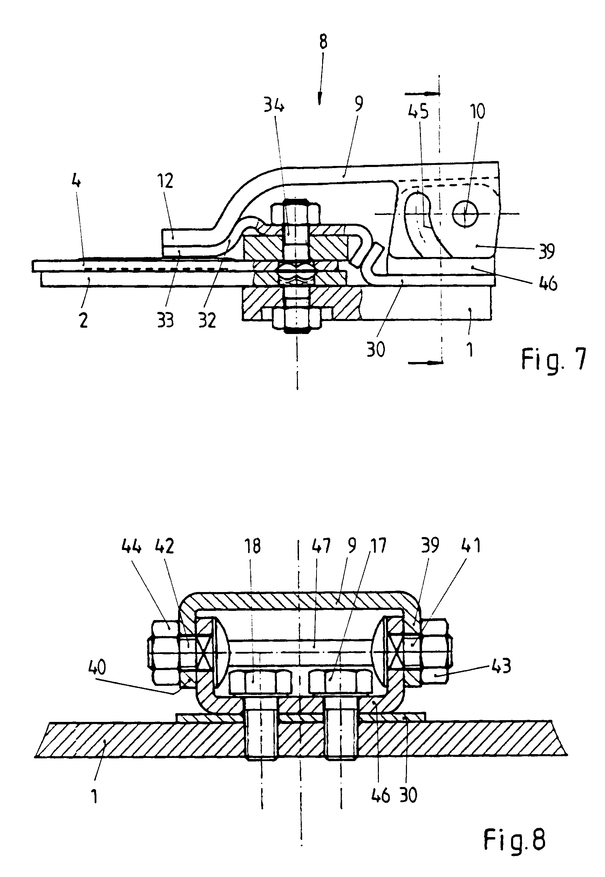

Bei der in den Figuren 7 und 8 dargestellten Ausführungsform greift die Klemmkraft außerhalb der Achse 10 an, und zwar im Bereich randoffener Langlöcher 45 in den beiden Lagerohren 39 und 40. Die beiden Winkelstücke 15 und 16 sind hier durch ein gemeinsames Winkelstück 46 ersetzt, welches von den Schrauben 17 und 18 gehalten ist. Auch hierbei finden zwei Schloßschrauben 41 und 42 Anwendung, die hier in dem Winkelstück 46 verdrehgesichert gelagert sind. Wenn die Langlöcher 45 randgeschlossen ausgebildet sind, besteht die Notwendigkeit, beim Lösen und Abklappen der Niederhalteplatte 9 um 180° nach hinten die Schloßschrauben 41 und 42 vorher gänzlich aus dem Winkelstück 46 herauszunehmen. Durch diese Konstruktion der Positionierung des Klemmkraftangriffs exzentrisch zur Achse 10 wird die übertragbare Klemmkraft grundsätzlich gesteigert. Die Achse 10 wird von einem Lagerbolzen 47 gebildet, der in den Lagerohren 39 und 40 mit nur einem geringen, für die Schwenklagerung erforderlichen Spiel verankert ist.

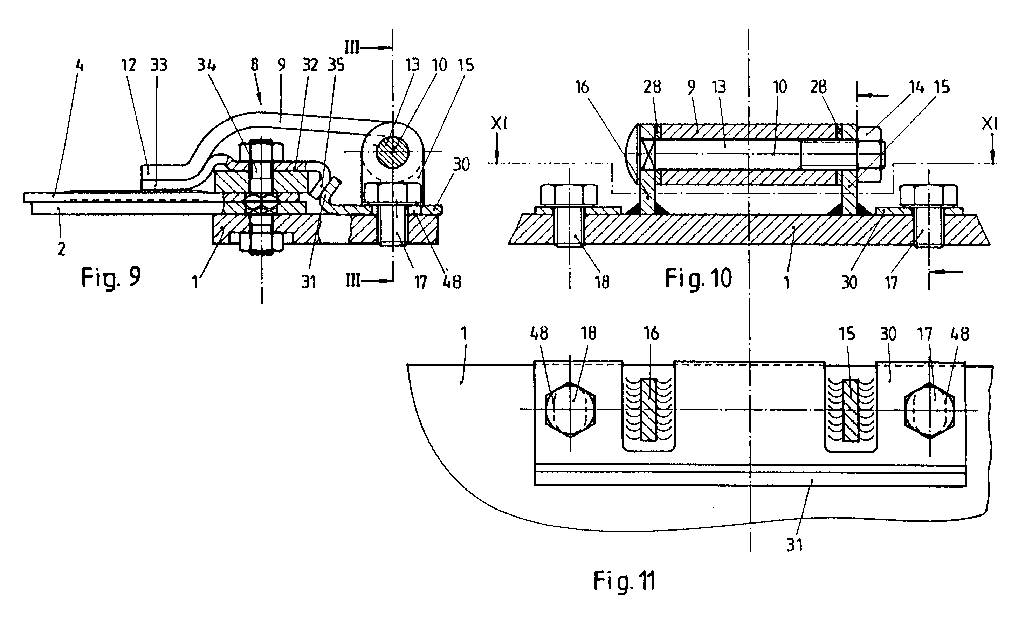

Figur 9 zeigt noch einmal die Konstruktion gemaß den Figuren 1 bis 3. Es ist ersichtlich, wie im Bereich der Befestigungsschraube 17 die Reibeplatte 30 mit einem sich in Arbeitsrichtung erstreckenden Langloch 48 versehen ist. Gleiches gilt für die Befestigungsschraube 18. Die Befestigungsschrauben 17 und 18 werden nur dann gelöst, wenn das Spiel in Fahrtrichtung neu eingestellt werden soll, was bekanntlich sehr selten geschieht. Auf die Einstellung des Höhenspiels hat dies keinen Einfluß. Dies geschieht, wie schon beschrieben, mit Hilfe der Schraube 13 und der Mutter 14. Wenn die Schrauben 17 und 18 zur Verstellung des Spiels in Fahrtrichtung gelöst werden, wird die Reibeplatte 30 relativ zur Achse der Schrauben 17 und 18 verschoben, und zwar so, daß die Lage der definierten Achse 10 erhalten bleibt. Ggf. kann hier auch eine geringfügige Korrektur erfolgen, wenn das Spiel zwischen dem Ende 33 der Führungsleiste 32 und dem vorderen Ende 12 des Niederhalters 8 eingestellt werden soll, und zwar in Fahrtrichtung.

In den Figuren 10 und 11 ist ein weiteres Ausführungsbeispiel verdeutlicht. Die Winkelstücke 15 und 16 bestehen hier nur aus vertikalen Teilen, die an dem Balkenrücken 1 ortsfest angeschweißt sind. Damit ist die Achse 10 definiert und ein für alle Mal relativ zum Balkenrücken 1 festgelegt. Man erkennt, daß die Verstellung der Reibeplatte 30 in Fahrt- bzw. Arbeitsrichtung völlig unabhängig von der Blockierung bzw. Freigabe der Schwenklagerung des Niederhalters 9 ist.

Auch bei dem Ausführungsbeispiel der Figuren 12 und 13 sind die Winkelstücke 15 und 16, die die Achse 10 der Schwenklagerung definieren, mit Hilfe einer Paßbohrung 49 ortsfest und unverrückbar gegenüber dem Balkenrücken 1 gehalten. Beim Lösen der Befestigungsschrauben 17 und 18 werden nur die Langlöcher 48 und mit ihnen die Reibeplatte 30 frei, so daß eine Verstellung in Fahrtrichtung möglich ist. Es versteht sich, daß beim normalen Nachschleifen des Obermessers die Befestigungsschrauben 17 und 18 nicht gelöst werden, sondern lediglich die Mutter 14 der Schraube 13.

Bei dem Ausführungsbeispiel der Figuren 14 und 15 schließlich besitzt die Reibeplatte 30 die Langlöcher 48 und die Winkelstücke 15 und 16 sind mit Langlöchern 50 versehen. Damit wird es möglich, auch die relative Lage der Achse 10 zum Balkenrücken 1 zu verändern bzw. nachzustellen. Im allgemeinen ist dies jedoch nicht erforderlich. Sollte ausnahmsweise das Spiel zwischen der Führungsleiste 32 und dem Niederhalter 9 dies erforderlich machen, so ist hier eine Korrekturmöglichkeit gegeben. Beim normalen Nachschleifen des Obermessers wird lediglich die Mutter 14 gelöst.

### Bezugszeichenliste:

- 1: = Balkenrücken
- 2: = Balkenklinge
- 3: = Messerrücken
- 4: = Mähklinge
- 5: = Schraube
- 6: = Mutter
- 7: = Antriebselement
- 8: = Niederhalter
- 9: = Niederhalteplatte
- 10: = Achse
- 11: = Winkel
- 12: = vorderes Ende
- 13: = Schraube
- 14: = Mutter
- 15: = Winkelstück
- 16: = Winkelstück
- 17: = Befestigungsschraube
- 18: = Befestigungsschraube
- 19: = Steg
- 20: = Durchbrechung
- 21: = Steg
- 22: = Durchbrechung
- 23: = Kopf
- 24: = Bereich
- 25: = Abschnitt
- 26: = Klemmfläche
- 27: = Klemmfläche
- 28: = Zwischenscheibe
- 29: = Kontaktfläche
- 30: = Reibeplatte
- 31: = Abkröpfung
- 32: = Führungsleiste
- 33: = Ende
- 34: = Schraube
- 35: = Abkröpfung
- 36: = Schnittebene
- 37: = Loch
- 38: = Verschwenkwerkzeug
- 39: = Lagerohr
- 40: = Lagerohr
- 41: = Schloßschraube
- 42: = Schloßschraube
- 43: = Mutter
- 44: = Mutter
- 45: = Langloch
- 46: = Winkelstück
- 47: = Lagerbolzen
- 48: = Langloch
- 49: = Paßbohrung
- 50: = Langloch

## Patentansprüche

1. Mähbalken mit einem Balkenrücken (1), einem Balkenklingen (2) aufweisenden Untermesser (1, 2) und mit einem angetriebenen Obermesser (3, 4), das auf einem Messerrücken (3) angeordnete Mähklingen (4) und ein auch auf dem Messerrücken (3) angeordnetes Antriebselement (7), insbesondere Messermitnehmer, aufweist, und mit über die Länge des Mähbalkens verteilten Niederhaltern (8), die jeweils an dem Balkenrücken (1) um eine durch Winkelstücke auf dem Balkenrücken festgelegte, sich parallel zur Haupterstreckungsrichtung des Mähbalkens erstreckende und oberhalb des Balkenrückens liegende Achse (10) derart schwenkbar angeordnet sind, daß das Obermesser (3, 4) ohne Demontage eines Antriebselementes (7) vom Messerrücken (3) nach vorn entnehmbar ist, und daß mindestens eine parallel zur Haupterstreckungsrichtung des Mähbalkens angeordnete Schraube (13) zum Einstellen des Niederhalters (8) vorgesehen ist, dadurch gekennzeichnet, daß jeder Niederhalter (8) in einer kein nennenswertes Spiel aufweisenden Schwenklagerung um die definierte Achse (10) schwenkbar gelagert ist, und daß die Schraube (13, 41, 42) ausschließlich für die Blockierung bzw. Freigabe der Schwenkbewegung jedes Niederhalters (8) und damit ausschließlich zur Verstellung des Höhenspiels vorgesehen ist.

2. Mähbalken nach Anspruch 1, dadurch gekennzeichnet, daß zur Einstellung des Spiels in Fahrtrichtung eine gesonderte Ver- und Einstelleinrichtung vorgesehen ist, die zwischen dem Balkenrücken (1) und die definierte Achse (10) eingeschaltet ist.

3. Mähbalken nach Anspruch 2, dadurch gekennzeichnet, daß die gesonderte Ver- und Einstelleinrichtung mindestens zwei am Balkenrücken (1) angreifende Befestigungsschrauben (17, 18) und sich in Fahrtrichtung erstreckende Langlöcher (48) aufweist.

4. Mähbalken nach einem der Ansprüche 1 bis 3, dadurch gekennzeichnet, daß pro Niederhalter (8) nur eine Schraube (13) vorgesehen ist und der Schraubenschaft zugleich die definierte Achse für die Schwenklagerung des Niederhalters (8) bildet.

5. Mähbalken nach einem der Ansprüche 1 bis 4, dadurch gekennzeichnet, daß zwischen jedem Niederhalter (8) und den Mähklingen (4) des Obermessers eine Führungsleiste (32) vorgesehen ist, und daß der Führungsleiste (32) eine Reibeplatte (30) zugeordnet ist, die auf dem Balkenrücken (1) angeordnet ist und die Langlöcher (48) aufweist.

6. Mähbalken nach einem oder mehreren der Ansprüche 1 bis 5, dadurch gekennzeichnet, daß jedem Niederhalter (8) als die definierte Achse (10) festlegende Elemente zwei Langlöcher (50) tragende Winkelstücke (15, 16) zugeordnet sind, die auf dem Balkenrücken (1) gelagert sind und aus der Schnittebene vorstehende Schenkel (19, 21) aufweisen, die sich parallel zur Arbeitsrichtung erstrecken.

7. Mähbalken nach einem oder mehreren der Ansprüche 1 bis 6, dadurch gekennzeichnet, daß die Schrauben/Muttern-Verbindung (13, 14) für die Einklemmung des Niederhalters (8) so angeordnet ist, daß die Anzugsrichtung der Schrauben/Muttern-Verbindung mit der Niederhalterichtung des Niederhalters (8) übereinstimmt.

8. Mähbalken nach einem der Ansprüche 1 bis 7, dadurch gekennzeichnet, daß die Schraube (13) als Schloßschraube ausgebildet ist.

9. Mähbalken nach einem oder mehreren der Ansprüche 1 bis 8, dadurch gekennzeichnet, daß der Niederhalter (8) seitlich Klemmflächen (26, 27) aufweist, die mit erhöhter Rauhigkeit versehen sind.

10. Mähbalken nach einem oder mehreren der Ansprüche 1 bis 9, dadurch gekennzeichnet, daß zwischen dem Steg (19 bzw. 21) des Winkels (15 bzs. 16) und dem Niederhalter (8) harte Zwischenscheiben (28) vorgesehen sind, deren Kontaktflächen (29) rauh ausgebildet sind.

## Claims

1. Mower bar, with a bar backing (1), a lower knife (1, 2) comprising bar blades (2), and a driven upper knife (3, 4) which comprises mower blades (4) arranged on a knife backing (3) and an actuation means (7), particularly a knife dog, also arranged on the knife backing (3), and with holding-down means (8) distributed over the length of the mower bar, each holding-down means being arranged on the bar backing (1) swivellingly about an axis (10), which is fixed by angles on the bar backing, extends parallel to the main extension direction of the mower bar and is arranged above the bar backing, in such a way that the upper knife (3, 4) can be removed at the front without dismounting any actuation means (7) from the knife backing (3), and that at least one screw (13) arranged parallel to the main extension direction of the mower bar is provided for adjusting the holding-down means (8), **characterized in** that each holding-down means (8) is mounted swivellingly about the defined axis (10) in a swivel bearing having no considerable play, and that the screw (13, 41, 42) is provided for blocking and unblocking the swivelling movement of each holding-down means (8) and, thereby, for regulating vertical play only.

2. Mower bar according to claim 1, **characterized in** that a separate regulating and adjusting device is provided for adjusting the play in motion direction, the separate regulating and adjusting device being inserted between the bar backing (1) and the defined axis (10).

3. Mower bar according to claim 2, **characterized in** that the separate regulating and adjusting device comprises at least two fastening screws (17, 18) engaging the bar backing (1) and elongated holes (48) extending in motion direction.

4. Mower bar according to one of the claims 1 to 3, **characterized in** that one screw (13) only is provided per each holding-down means (8) and that the screw shaft at once forms the defined axis of the swivel bearing for the holding-down means (8).

5. Mower bar according to one of the claims 1 to 4, **characterized in** that a guide bead (32) is provided between each holding-down means (8) and the mower blades (4) of the upper knife, and that a slide plate (30) is allocated to the guide bead (32), the slide plate (30) being arranged on the bar backing (1) and comprising the elongated holes (48).

6. Mower bar according to one of the claims 1 to 5, **characterized in** that two angles (15, 16) provided with elongated holes (50) are allocated to each holding-down means (8) as means fixing the defined axis (10), said angles (15, 16) being arranged on the bar backing (1) and comprising legs (19, 21) which jut out of the cutting plane and extend parallel to the working direction.

7. Mower bar according to one of the claims 1 to 6, **characterized in** that the screw/nut-connection (13, 14) for clamping the holding-down means (8) is arranged in such a way that the fastening direction of the screw/nut-connection corresponds to the holding-down direction of the holding-down means (8).

8. Mower bar according to one of the claims 1 to 7, **characterized in** that the screw (13) is constructed like a coach screw.

9. Mower bar according to one of the claims 1 to 8, **characterized in** that the holding-down means (8) comprises lateral clamping surfaces (26, 27) provided with an increased roughness.

10. Mower bar according to one of the claims 1 to 9, **characterized in** that hard washers (28) are provided between the leg (19 or 21) of the angle (15 or 16, respectively) and the holding-down means (8), the contact surfaces (29) of the hard washers being rough.

## Revendications

1. Barre de coupe comportant un dos (1), une lame inférieure (1, 2) présentant des dents de barre (2) et comportant une lame supérieure (3, 4) entraînée, qui comporte des dents de coupe (4) placées sur un porte-lame (3) et un élément d'entraînement (7) placé sur le porte-lame (3), en particulier un entraîneur de lame, et comportant des pieds presseurs (8) répartis sur la longueur de la barre de coupe, qui sont placés chacun pivotant sur le dos (1) de la barre, autour d'un axe (10) défini par des équerres sur le dos de la barre, s'étendant parallèlement à la direction d'extension principale de la barre de coupe et situé au-dessus du dos de la lame, de telle sorte que la lame supérieure (3, 4) puisse être enlevée vers l'avant sans démontage d'un élément d'entraînement (7) du porte-lame (3), et en ce qu'au moins une vis (13) parallèle à la direction d'extension principale de la barre de coupe est prévue pour le réglage du pied presseur (8), caractérisée en ce que chaque pied presseur (8) est monté pivotant autour de l'axe (10) défini, dans un palier de pivotement ne présentant pas de jeu notable, et en ce que la vis (13, 41, 42) est prévue exclusivement pour le blocage ou l'autorisation du mouvement de pivotement de chaque pied presseur (8) et donc exclusivement pour le réglage du jeu en hauteur.

2. Barre de coupe selon la revendication 1, caractérisée en ce que pour le réglage du jeu dans le sens de la marche, il est prévu un dispositif particulier d'ajustage et de réglage, qui est monté entre le dos (1) de la barre et l'axe (10) défini.

3. Barre de coupe selon la revendication 2, caractérisée en ce que le dispositif particulier d'ajustage et de réglage comporte au moins deux vis de fixation (17, 18) agissant sur le dos (1) de la barre et des trous allongés (48) s'étendant dans le sens de la marche.

4. Barre de coupe selon l'une des revendications 1 à 3, caractérisée en ce qu'il n'est prévu qu'une vis (13) par pied presseur (8) et la tige de la vis forme en même temps l'axe défini pour le palier de pivotement du pied presseur (8).

5. Barre de coupe selon l'une des revendications 1 à 4, caractérisée en ce qu'entre chaque pied presseur (8) et les dents de coupe (4) de la lame supérieure il est prévu une barre de guidage (32) et en ce qu'à la barre de guidage (32) est associée une plaque de friction (30), qui est placée sur le dos (1) de la barre et qui présente les trous allongés (48).

6. Barre de coupe selon une ou plusieurs des revendications 1 à 5, caractérisée en ce qu'à chaque pied presseur (8) sont associés, en tant qu'éléments définissant l'axe (10) défini, deux équerres (15, 16), portant des trous allongés (50), qui sont montées sur le dos (1) de la barre et qui présentent des branches (19, 21), faisant saillie du plan de coupe, qui s'étendent parallèlement à la direction de travail.

7. Barre de coupe selon une ou plusieurs des revendications 1 à 6, caractérisée en ce que l'assemblage à vis/écrou (13, 14) pour le serrage du pied presseur (8) est placé de telle sorte que le sens de serrage de l'assemblage à vis/écrou coïncide avec le sens de pression du pied presseur (8).

8. Barre de coupe selon l'une des revendications 1 à 7, caractérisée en ce que la vis (13) est un boulon brut à tête bombée et collet carré.

9. Barre de coupe selon ou plusieurs des revendications 1 à 8, caractérisée en ce que le pied presseur (8) présente sur le côté des surfaces de serrage (26, 27) qui sont pourvues d'une rugosité accrue.

10. Barre de coupe selon une ou plusieurs des revendications 1 à 9, caractérisée en ce qu'entre le bord relevé (19 ou 21) de l'équerre (15 ou 16) et le pied presseur (8) sont prévus des disques intermédiaires (28) durs, dont les surfaces de contact (29) sont rugueuses.
